(19) Europäisches Patentamt
European Patent Office
Office européen des brevets

(11) **EP 4 681 867 A1**

(12) **EUROPEAN PATENT APPLICATION**

(43) Date of publication:
**21.01.2026 Bulletin 2026/04**

(21) Application number: **24382769.8**

(22) Date of filing: **16.07.2024**

(51) International Patent Classification (IPC):
**B23P 9/00** $^{(2006.01)}$ **B23P 25/00** $^{(2006.01)}$
**C22F 1/00** $^{(2006.01)}$ **C21D 7/02** $^{(2006.01)}$
**G05B 19/404** $^{(2006.01)}$

(52) Cooperative Patent Classification (CPC):
**B23P 25/00; B23P 9/00; G05B 19/4093;**
C21D 5/00; C21D 2261/00; C22F 1/10; C22F 1/183;
G05B 2219/45143; G05B 2219/45234

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Universidad del País Vasco/Euskal Herriko Unibertsitatea**
**48940 Leioa, Vizcaya (ES)**

(72) Inventors:
• **LÓPEZ DE LACALLE MARCAIDE, Luis Norberto**
**48940 Leioa (BIZKAIA) (ES)**

• **SÁINZ DE LA MAZA GARCÍA, Álvaro**
**48940 Leioa (BIZKAIA) (ES)**
• **PEREIRA NETO, Octavio Manuel**
**48940 Leioa (BIZKAIA) (ES)**
• **MARTÍNEZ DE PISSON CARUNCHO, Gonzalo**
**48940 Leioa (BIZKAIA) (ES)**
• **FERNÁNDEZ VALDIVIELSO, Asier**
**48940 Leioa (BIZKAIA) (ES)**

(74) Representative: **Balder IP Law, S.L.**
**Paseo de la Castellana 93**
**5ª planta**
**28046 Madrid (ES)**

(54) **STRESS ASSISTED MACHINING METHOD**

(57) Stress assisted machining method for the machining of workpieces (4), for example slender, or thin-floored or thin-walled workpieces (4), based on the application of a controlled stress state to the workpiece (4) during machining. The method comprises the steps of placing (20) a workpiece (4) in a machining machine; applying (30) a stress state to the workpiece (4), the stress state being selected from tensile, compression, bending, torsion and a combination of two or more of them; performing (40) a machining operation while maintaining the stress state on the workpiece (4) and releasing (50) the applied stress state from the workpiece (4).

FIG. 3

EP 4 681 867 A1

## Description

## TECHNICAL FIELD

The present invention is a method that relates to the field of machining, and more specifically to the field of machining preferably slender or thin-floor or thin-wall workpieces. The method is based on the application of a controlled stress state to the workpiece during machining.

## STATE OF THE ART

In manufacturing processes of metal workpieces using machining methods, such as milling, turning, drilling, etc., very slender, thin-walled or thin-floored workpieces present complications, which are especially significant when a complex geometry is to be manufactured. Also, the machining of this kind of workpieces when they are produced with some materials, such as cast iron, forging, nickel or titanium-based alloys or composite materials present further difficulties, many of them due to the stress that arises either during the machining process of the workpiece itself or when it is released from its clamps. In many cases, after releasing the workpiece from its fastenings, deformations occur due to residual stresses.

Said deformations occur because during machining if the original workpiece had residual stresses due to the previous manufacturing stages, when machining there is a stressed material removal that forces a redistribution of the final residual stresses, generating a deformation of the complete workpiece. In addition, the machined surface of the workpiece tends to be affected by new residual tensile stresses near the surface itself due to the chip removal process, having a negative effect on the life of the workpiece when it is subjected to fatigue cycles (mechanical or thermal).

When the manufacturing needs imposed by the geometry require the use of machining as a manufacturing technology, and when because of the risk of fatigue failure of the workpiece residual tensile stresses on the surface are not admissible, it is essential to verify that the machining operation generates compressive residual stresses on the final surface of the workpiece and if that is not the case, a subsequent operation that causes is to be carried out.

In addition, because of the geometry and reduced rigidity of the slender, thin-floor or thin-wall workpieces, the natural frequencies (rate at which an oscillatory system tends to oscillate in the absence of disturbance) of these workpieces are relatively low, enough to be excited during machining, producing vibrations of considerable magnitude that may cause marks on the workpiece that do not meet the established surface finish requirements, and even the breakage of the workpiece itself or of the tool. This type of vibration and others that are also self-excited and whose amplitude tends to increase over time are usually called "chatter".

Particularly in the aeronautical sector, some of the most challenging workpieces to manufacture are the engine components, among which the turbine and compressor blades stand out, as they are included in the group of thin-wall, thin-floor and very slender workpieces, in addition to being manufactured in most cases in nickel or titanium alloys, whose machinability is very low. Something similar happens with blades in other industries, such as the energy industry, where large steam turbine blades made of stainless steel are used. In addition to having a complex geometry, these types of workpieces have extremely strict dimensional and shape accuracy requirements and roughness limitations, which is one of the main limiting aspects in their manufacture.

In the composite materials sector, many workpieces are of low stiffness, and when trimming or other milling operations are performed, problems also occur, specially related to vibrations.

Nowadays, most blades are manufactured by milling on 5-axis machines, and there are different configurations for this purpose. Thus, a multitude of techniques have been developed to solve the problems that tend to appear, including new milling cutter geometries, the use of stiffeners that hold the workpiece so that it suffers less deformation during machining, the use of active vibration control systems or the modification of cutting parameters, among others.

A much less common alternative to those approaches is the use of tensile stresses for the manufacture of workpieces by turning, with techniques that can be used for revolution workpieces, which apply a longitudinal tensile stress to the workpiece during turning, and others that are only suitable for tubular workpieces, in which a pressure is applied inside that pulls the surface of the tube.

It has been proven both theoretically and experimentally that, when turning workpieces under an initial tensile stress, the residual stresses on the surface can be controlled and can even be made to be compressive instead of the usual tensile. In addition, when the workpiece is pulled, it has been verified that its natural frequencies increase and therefore, chatter-type vibrations can be avoided, achieving a stable cutting.

There are several documents that describe tools for carrying out this turning methodology, such as CN102615291B, which describes a prestress turning method for shaft workpieces and a prestressed turning device. Document CN206702663U also describes a clamp for prestressing a workpiece for turning. Document CN114700507A discloses a prestress turning device for shaft parts.

Regarding the use of tensile stresses for changing the natural frequency of the workpiece during the manufacturing process, document CN103846706B describes a 4-axis mill-turning tool that allows the workpieces to be pulled during the operation. The prestress applied to the workpieces is measured by a force sensor, and the prestress applied to it is adjusted by a screw transmission mechanism, thereby achieving control of the prestress during the workpiece processing, effectively improving the stability and reducing the mechanical vibration during the machining process.

## DESCRIPTION OF THE INVENTION

The object of the invention is a stress assisted machining method. The method is based on the application of a controlled stress state to a workpiece during the machining, which seeks to avoid the most common problems that happen during machining and to achieve high quality components with near perfect shape. Particularly, the method allows to obtain compressive residual stresses on the machined surface of the workpiece (beneficial against fatigue), a good surface finish, an increase in the rigidity of the workpiece and a reduced tendency to vibration during the operation.

The proposed method differs from those already known in that it can be applied to any kind of machining operation, such as milling (in configurations with a different number of degrees of freedom) and it is not limited to turning operations. It also differs in the type of stress states that are applied to the workpieces, which are not limited to tensile stresses, and in the fact that, consequently, it solves a larger set of problems usually present in machining operations, in addition to being applicable to much more complex geometries.

Some of the problems that are solved using this method are those due to the deformations and vibrations that the workpiece can suffer due to its low rigidity, with the consequent problem in the surface finish and shape errors, and the tendency for tensile residual stresses to appear on the machined surface. The problems due to the low rigidity can mean that, if a workpiece is very thin, machining is generally not possible or requires the use of cutting parameters that are not very aggressive, whereas using this method eases the machining with far fewer difficulties and in a much more productive way. Furthermore, if the tendency of the workpiece to suffer high amplitude vibrations, due to resonance problems, the change in natural frequencies induced by the applied stress state makes possible to avoid them.

Along the following description it is understood that a workpiece is a piece of metal or other material that is in the process of being worked on or made or has been cut or shaped by a hand tool or machine.

A first aspect of the invention is a stress assisted machining method, comprising the steps of:

- placing a workpiece in a machining machine,

- applying a stress state to the workpiece, the stress state being selected from tensile, compression, bending, torsion and a combination of two or more of them,

- performing a machining operation while maintaining the stress state on the workpiece, and

- releasing the applied stress state.

Tensile stress is a quantity associated with stretching or tensile forces. It is responsible for the elongation of the material along the axis of the applied load. A compressive stress is a mechanical force where an object is squeezed. Bending stress causes some parts of the material to experience tensile stresses (stretching) and others to become compressed. Torsional stress is a form of shear stress experienced by a workpiece when a twisting force is applied. In a more general way, when tensile and compressive stresses are combined into a new one, applying them in different directions at the same time, all possible stress states can be achieved, including bending and torsional stress states.

Introducing stresses that are not limited to pure tensile stresses makes it possible to control the residual stresses generated in the different areas of the workpiece and to correct deformations during the machining operation more easily, in addition to reducing vibrations in components of any geometry.

An example of this greater ease of correction can be seen, for example, when machining a blade type workpiece while applying a stress state of pure traction, where when the machining removes material, it produces an effective offset of the load with respect to the section already machined that tends to deform the workpiece towards the tool. On the contrary, if as it is machined an additional bending is introduced, complementary to the traction considered, the geometric error due to the offset of the load with respect to the section can be avoided.

Depending on the geometry of the workpiece, it is possible to choose a suitable stress state that increases the stiffness of the workpiece, resulting in lower deformations due to forces involved in the machining operation, produces compressive residual stresses near the machined surface, avoids vibration problems and improves the surface finish, all at the same time.

As an example, for the most common type of workpieces in the aeronautical sector, the stress state to be applied is usually a combination of tensile and bending, because a compressive residual stress is to be obtained on the machined surface. In any case, the stress state depends on the results to be achieved and the geometry of the workpiece.

The decision of what stress state to apply and how to control it depends on the geometry of the workpiece and the difficulty to correct the deformations that it suffers during machining. In an embodiment of the invention, it is sought that the residual stress state on the surface is compressive, to limit the occurrence of fatigue cracks and thus functional hazards in the workpiece. In an embodiment of the invention, the stress state to be applied on the workpiece is generally between 50% and 65% of the yield stress. Although for each case another value may be recommended. The selection of the stress state is made for each workpiece after an analysis of its geometry and can be chosen either by using calculation methods of classical mechanics, by means of simulations or based on tests, among others.

In an embodiment of the invention the machining operation is a milling operation.

The interest of applying the method in milling operations and not only in turning operations lies in the ability to manufacture workpieces with much more complex geometries than those that can be obtained in turning operations, such as gas or steam turbine blades.

In an embodiment of the invention the workpiece is of a material selected from metallic, polymeric, and polymeric or metallic matrix composite material.

In an embodiment of the invention, the application of this method is focused on the milling of metallic workpieces, but due to its advantages in terms of stiffening and improvement of the surface finish, its applicability is not limited to metallic materials, it can be used in the machining of other materials, such as polymers and polymeric or metallic matrix composite materials, to which it provides similar advantages.

In an embodiment of the invention the workpiece is a slender workpiece.

Throughout the document, a workpiece is considered to have a thin wall, a thin floor or to be slender when either of its dimensions is at least five times larger than either of the other two. This definition applies to whole workpieces as well as to portions thereof.

In the case of slender workpieces, the method allows to obtain residual compressive stresses on the surface of the workpiece, a good surface finish and an increase in the rigidity of the workpiece and a reduced tendency to vibration during the operation, as previously explained. However, this method can also be applied to workpieces that are not slender and whose thickness is significant, but in this case, with the objective of introducing compressive residual stresses near the surface, the effect of tensile stiffening not being important.

In an embodiment of the invention the workpiece is a turbine blade.

As discussed above, these types of workpieces that are slender and must be machined by milling receive great benefits when machined by the present method as they are very complex to manufacture due to their geometry, to their slender and complex surfaces, as well as to the materials they are made of, generally nickel or titanium-based alloys, which present significant difficulties when they are machined.

In an embodiment of the invention the stress state induced in the workpiece is constant over time.

If an initial stress state is applied to the workpiece and the tools that have generated it are kept fixed throughout the machining operation, the stress state will tend to change as consequence of the material removal. Thus, if a constant stress state is to be maintained in the machining zone throughout the machining operation, it must be continuously corrected adjusting the position of the tools.

In an embodiment of the invention the stress state induced in the workpiece is time-varying.

In other cases, it is of interest to apply a variable stress state, either because of the geometry of the workpiece or because of the results to be obtained. In this case, when an initial stress state is applied the tools that have generated it are kept fixed throughout the machining operation and the stress state will change along the machining operation. Alternatively, in an embodiment of the invention, the tools that cause the stress state can apply different stress states during the machining. Keeping the stress state constant over time is of special interest when the initial shape of the workpiece and the final one are similar, with little material removal or when trajectory correction is made based on simulations. In other cases, especially when the volume of removed material in of considerable significance in the workpiece, or when any of its sections suffers a great variation in shape, the use of a time varying introduced stress state is generally preferred.

In an embodiment of the invention the stress state is below the yield strength of the workpiece.

This is because it is not desired that the machined workpiece suffers permanent deformations due to the stress state, and therefore cannot reach the sought final geometry without having undesired microstructural changes.

In an embodiment of the invention, the method further comprises determining the stress state to be applied from the area of the section of material of the workpiece affected by machining, the complete area of the section and the maximum magnitude of the residual stress after the machining operation for a certain workpiece material, a cutting tool and machining parameters when no stress state is applied to the workpiece.

In an embodiment of the invention the stress state ($\sigma$) to be applied is:

$$\sigma = \sigma_r \times \frac{a_a}{a_n}$$

where $\sigma_r$ is the maximum residual stress on the surface of the workpiece, $a_a$ is the section of material of the workpiece affected in machining and $a_n$ is the section of material of the workpiece not affected by machining, all of them obtained for a machining operation done without any externally applied load.

The section of the machined workpiece can be understood as a body composed of a surface area that has undergone plastic deformations and/or thermal affections as a consequence of the machining operation, whose thickness is generally small (usually less than 100 micrometers) in relation to the total thickness of the workpiece, and a zone, which comprises the rest of the section of the workpiece that maintains all its properties throughout the machining operation. Thus, most of the material, in fact all but a surface layer, undergoes only elastic deformations during the machining operation. The selection of the applied stress state must be made in such a way that the elastic recovery occurring in this material without plastic deformations compensates for the residual tensile stresses introduced in the surface layer by the machining operation.

Thus, the minimum value of the stress state to be introduced into the workpiece is calculated. The higher the residual stress, the higher the stress state introduced, but limited by the elastic limit of the material, since yielding of the material because of the applied stress state must be avoided.

The stress distribution on the surface is not uniform, but since only the material closest to the surface is analyzed, it can be assumed for the calculation that, in all the material that has undergone plastic deformation, the residual stress introduced by machining is tensile and with the maximum value of the residual stresses found in the surface area, thus being on the safe side.

To perform the correction in this way, it is necessary to know the material thickness that has been affected by the machining operation, and the maximum magnitude of the residual stresses that are reached for the combination of workpiece material, tool and cutting parameters used for the operation. In an embodiment of the invention, these values can be calculated theoretically or by finite element simulations. In another embodiment of the invention, they can be obtained from a machining test on the workpiece material, with a tool equal to the one used for machining and with the same cutting parameters employed in the operation, but without applying the stress state of the method of the invention. This test can be performed quickly and easily at a reduced cost, since it is sufficient to machine a small workpiece, being important only to be able to measure on it the residual stresses left by the machining and the depth affected. The latest could be done, for example, by metallographic analysis.

As an example, knowing these values, for a sheet metal workpiece where a slot is to be machined, the stress to be applied is a tensile stress equal to or greater than the maximum residual tensile stress measured on the surface multiplied by the section of material that has been affected by machining and divided by the section of material not affected by the operation.

Thus, if the thickness of the machined workpiece is large, the stress to be applied is lower than on thinner parts.

In an embodiment of the invention the method comprises an additional step of correcting the deformation due to the introduced stress state.

Specifically, machining is performed not manufacturing the workpiece with the desired geometry, but the trajectory of the tool is modified to manufacture a slightly different shape, considering the deformations due to the applied stress state, and how these vary when material is removed from the workpiece, so that when the finished workpiece is released it has the desired geometry.

As an example, in the case where the stress state is a combination of tension and bending, which induces a larger shape in geometry by including elastic deformation, the machining paths must be defined considering that there will be a recovery, specifically shrinkage, of the workpiece after the stress state is no longer applied. If, on the other hand, the predominant initial stress state is compression, the effect to be corrected is the opposite.

In one embodiment of the invention, to correct this deformation, a previous elastic calculation can be performed using analytical methods (of classical mechanics), or numerical methods and accurately obtain the induced deformation and shrinkage, which will depend on the geometry of the workpiece.

In an embodiment of the invention, to determine the magnitude of the correction numerically, the machining path of the workpiece is discretized over time, and for each time element it is determined what is the deformation of the workpiece with the externally applied stress state. It is important to note that, in this simulation, the geometry of the workpiece should not be the final one, but at each time-step the one corresponding to the starting material, after the removal the one that has already been machined up to that moment. The deformation in the tool axis direction of the contact point of the tool itself with the final workpiece represents the correction to be made in the trajectory in that same direction. This correction can be positive (moving the tool away from the workpiece) or negative (moving the tool closer to the workpiece), depending on whether the stresses at that point are tensile or compressive, respectively. The same phenomenon occurs with the side walls, but instead of analyzing the deformation in the direction of the tool axis, it is necessary to consider the deformation in the radial direction.

Since, when using the method of the invention, the deformations due to cutting forces in the workpiece are smaller, the error due to these will be smaller than that obtained for an equivalent operation by traditional methods. Thus, if the deformation due to the introduced stress is corrected, the resulting error will be lower than without stressing the workpiece.

A second aspect of the invention is a device, configured to perform the method previously described, comprising:

- a base,

- a gripping element, for gripping the workpiece to be machined, and

- a movable element, which can be displaced with respect to the base, and joined solidly to the gripping element, so that when the movable element is displaced, a stress state is applied to the workpiece to be machined.

In an embodiment of the invention the gripping element comprises grippers and the movable element is a vice comprising a fixed jaw and a movable jaw movable relative to the fixed jaw, the grippers each being attached to one of the jaws.

In this case, the workpiece is fastened between the grippers and when the jaws are separated or joined, a tensile or compressive stress state is applied to the workpiece, respectively.

In an embodiment of the invention the device further comprises an electric motor or hydraulic circuit connected to the movable jaw to displace it with respect to the fixed mouth. In this way, it is not necessary to make a manual effort to apply the tensional state to the workpiece.

In an embodiment of the invention the gripping element comprises four columns, one of which is fixed with respect to the base and the remaining three are movable with respect to the base, a first end being intended to clamp the workpiece to be machined and a second end being supported by the base. Additionally, the movable element comprises first connecting pieces between the second ends of the columns, the elements being of variable length to allow the relative movement of the second ends of the columns.

In an embodiment of the invention the movable columns additionally comprise rotation joints with respect to the base.

In an embodiment of the invention the device further comprises second connecting pieces of variable length, fixed close to the first end of the columns, to allow the relative movement of the first ends of the columns.

In this way, a tensile, compressive, bending or torsional stress state can be applied to the workpiece, or even a combination of the above, using a single device, allowing to apply different stresses in each direction.

In conclusion, the method and device of the present invention make it possible to significantly reduce the deformations during machining due to cutting forces, especially in slender workpieces, and with them the geometrical error caused, thanks to the effect of tensional stiffening. This phenomenon means that when a workpiece is pulled longitudinally, its transverse stiffness increases, as is the case, for example, with cables or ropes. Thanks to stress-induced stiffening, the tendency of the workpiece to vibrate during the machining operation because of the variation of cutting forces is reduced, in addition to modifying its natural frequencies, thus preventing the workpiece from suffering resonance phenomena under certain conditions.

In addition, using this method and device for the manufacture of slender or thin-walled and/or thin-floored workpieces is interesting since vibration problems during milling are largely avoided, surfaces with a very good finish are obtained, the resulting geometry is the same as the theoretical one and the residual stresses left on the surface are compressive. This solves at the same time the most common problems in the machining of slender workpieces: poor surface finish, residual tensile stresses near the surface (detrimental to fatigue), large shape errors difficult to correct, marks due to vibrations, impossibility of manufacturing some workpieces with very low rigidity. It is also noteworthy that thicker workpieces benefit more from the residual stresses left in them, while thinner workpieces benefit mainly from the stiffening effect of the method.

On the other hand, this method and device also reduce significantly the machining tool costs, offering a solution that represents a simultaneous improvement in relation to all the problems that arise and can be used in combination with most of the existing techniques. Moreover, by allowing the manufacture of very thin workpieces without vibration problems, it avoids having to work from an initial workpiece of greater thickness in search of greater rigidity, thus reducing material waste and tool wear, two very positive effects in terms of the environment. In addition, by avoiding the phenomena of vibration and deformation of the workpiece, using the proposed method makes possible to use more aggressive cutting parameters, reducing the operation time and with it the consumption of the machine and the final cost of the workpiece.

Finally, this machining method has proven to be very useful when the machining is a milling of extremely thin (slender) workpieces without the need for these to be supported on a rigid tooling or similar, allowing the manufacture of some workpieces that was not possible before, representing an advance applicable to sectors in which workpieces of complicated geometries with high precision are required, including aerospace and medical instruments.

Even though the proposed method is to be used in machining operations, it could also be applied to other technologies like additive manufacturing, where the residual stresses left in the component are of big magnitude, and which can possibly be compensated using a prestressing of the initial component or the substrate.

**BRIEF DESCRIPTION OF THE DRAWINGS**

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:

Figure 1 shows a flow diagram of the stress assisted machining method.

Figure 2 shows schematically a stress state applied to a workpiece, wherein the stress state is of pure tension (A), pure compression (B), pure bending (C) and pure torsion (D).

Figure 3 shows a first embodiment of a device for applying the stress assisted machining method.

Figure 4 shows a second embodiment of a device for applying the stress assisted machining method.

## DESCRIPTION OF A WAY OF CARRYING OUT THE INVENTION

The following description is not to be taken in a limiting sense but is given solely for the purpose of describing the broad principles of the invention. Next embodiments of the invention will be described by way of example, with reference to the above-mentioned drawings, showing apparatus and results according to the invention.

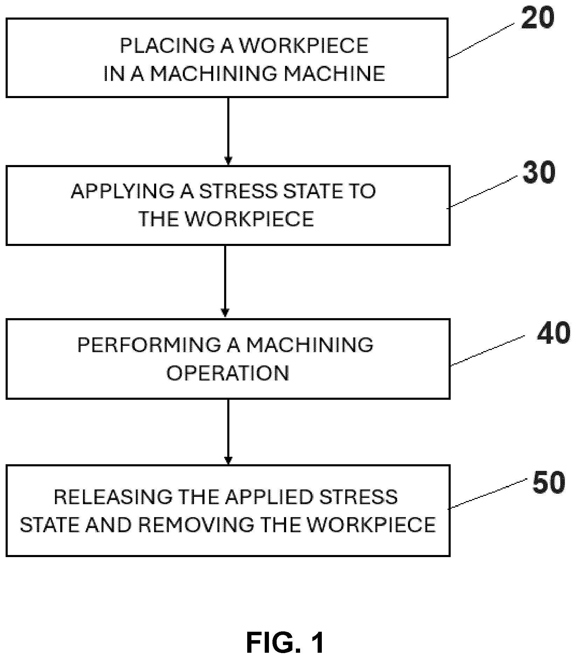

Figure 1 shows a flow diagram of the stress assisted machining method, object of the present invention. As shown in said figure, a first step is placing 20 a workpiece 4 to be machined in a machining machine. The machining machine could be a machine for milling, turning, drilling, grinding, planning, sawing, broaching, electric discharge machining, electro chemical machining, among others, or a combination of all or some of them.

The workpiece 4 is fixed to the machine and then, in the next step, a stress state is applied 30 to the workpiece 4. The stress state can be selected from tensile, compression, bending, torsion and a combination of the above. Figure 1 represents said stress states when they are pure and not mixed between them. Particularly, A) represents a pure tensile stress state, B) represents a stress state of pure compression, C) represents a stress state of pure bending and D) represents a stress state of pure torsion. The combination of them is not represented in the figures.

Then, following the flow diagram, a machining operation is performed 40 on the workpiece 4, while the stress state is maintained on the workpiece 4. The stress state can be constant in time, or it can vary during the machining operation, but a stress state is applied during the machining in any case, at least during part of the machining time.

Finally, once the machining ends, the stress state is released 50 and the workpiece 4 is removed from the machine.

There are multiple devices for applying the method of the present invention, depending on the type of workpiece 4 to be machined, the desired productivity and the stress state to be applied.

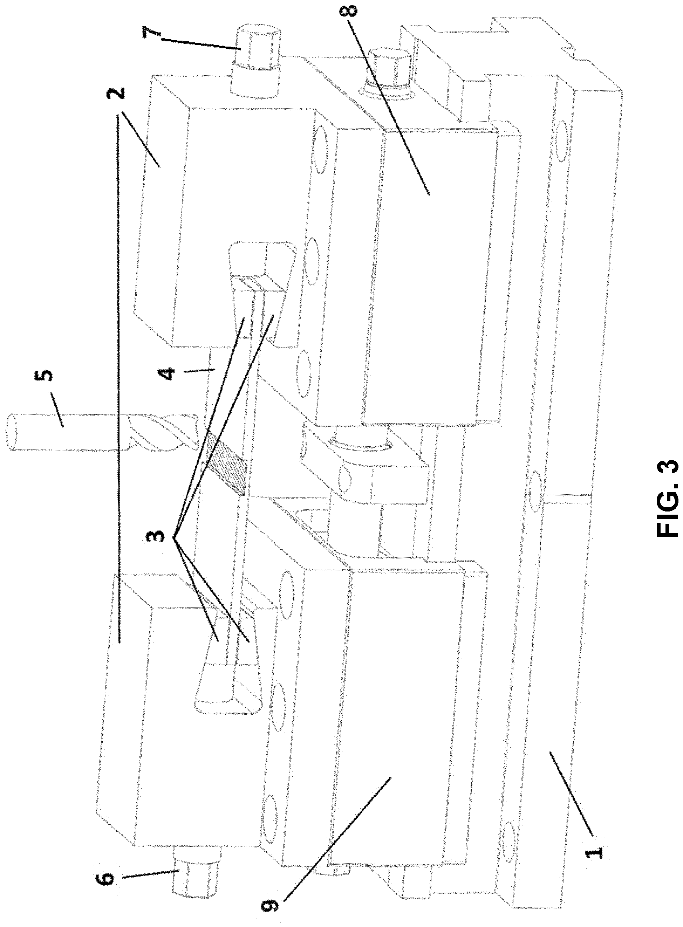

A first example of a device for applying the stress assisted machining method is presented in figure 3. In this case, the workpiece 4 to be machined has a rectangular geometry and is slender.

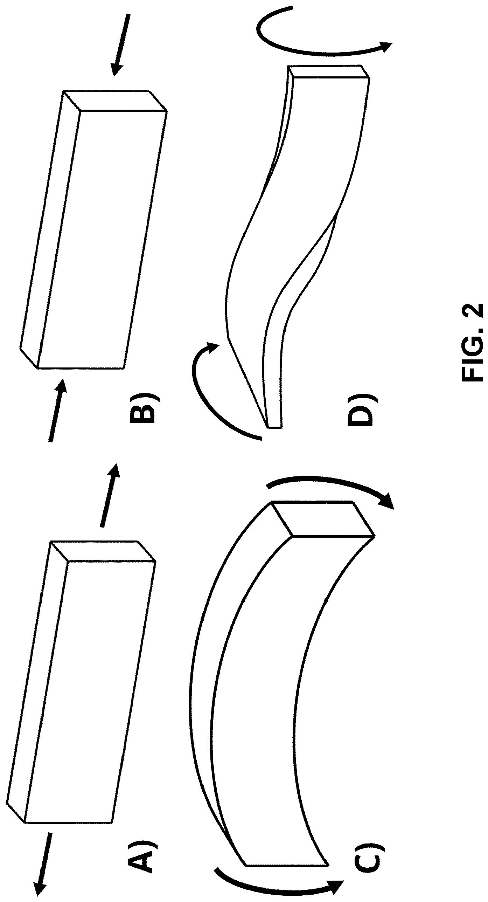

In this case it is possible to improve its manufacturability by using a manual pulling device which is shown in figure 2. The device comprises a base 1 and two mobile jaws 8 and 9, movable with respect to the base 1. When the mobile jaw 9 is moved away with respect to the other jaw 8, it can apply tensile forces.

To apply said tractions forces to the workpiece 4, the device of figure 3 also comprises clamps 2, fixed to the jaws 8, 9, and four toothed wedges 3, two for each clamp 2, so that they have a better grip and can hold the workpiece 4.

Once positioned, by moving jaw 9 away from jaw 8, the desired tensile stress is applied to the workpiece 4, after which the desired machining operation can be carried out, for example the milling of a slot, being necessary to correct the trajectory to compensate for the deformations introduced in the tensioning and those that will be produced because of removing asymmetrically tensioned material.

In figure 3, this milling operation is schematically represented on the upper face of the workpiece 4 with a striped area corresponding to the surfaces generated by the machining, which delimits the material removed by a face milling cutter 5.

Figure 3 also shows two screws 6 that maintain a certain pressure on the rear surface of the wedges 3 to prevent them from being thrown against the operators in the event of a failure, as well as favoring the retention of the workpiece 4 by exerting an additional force that tends to bring the wedges 3 together, tightening the workpiece 4.

Once milling is complete, the clamp 2 tension is released and the workpiece 4 is free, with its final geometry, which corresponds adequately and correctly to the desired geometry. In this situation, knowing that the tensile stress is appropriate for the chosen workpiece 4 and operation, the residual stresses left on the machined surface will be compressive (favorable against fatigue). In addition, the surface finish will be considerably better than if no stress state had been applied, and the geometry will be closer to that intended. If the thickness of the workpiece 4 is very small, less than 0.5 mm for example, the slotting operation would most likely not be feasible using conventional methods or would have required a long machining time with very unaggressive parameters and a small tool, whereas using the proposed method, this machining is not a major problem.

If the described device were to be used, for example, for the manufacture of aeronautical turbine blades, the wedges 3 used would have to be replaced with ones that have the necessary geometry to clamp the blade ends. It is also possible to take advantage of the geometry of the blade base to carry out the clamping by eliminating the wedges 3 and modifying the geometry of the clamps 2.

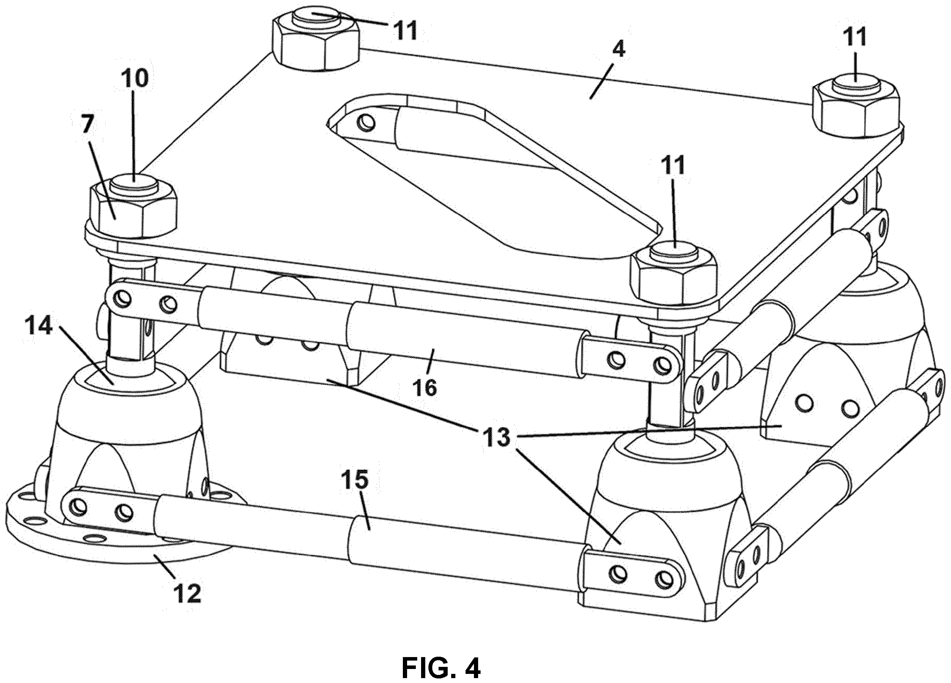

Given that the proposed method allows the manufacture of workpieces 4 by introducing considerably more complex stress states, a second device for applying the method is shown in figure 4. In this case, the operation to be carried out is the trimming operation of an inner bore of a workpiece 4, which is a plate made of composite material, for example carbon fiber.

The device of this embodiment is based on the use of four columns, one fixed column 10 and three mobile columns 11. The fixed column 10 is fixed to a support (not shown) with a fixed base 12 which prevent the fixed column 10 from tilting, and the mobile columns 11 being fixed to the support with mobile bases 13. The movable columns 14 can tilt and rotate with respect to the mobile bases 13 thanks to a joint 14 represented in figure 14.

The workpiece 4 is fastened to the end of the columns 10 and 11 opposite to their bases 12 and 13 with nuts 7.

The bases 12 and 13 of the columns 10 and 11 are connected to each other by means of first elements of variable length 15, which can vary their length thanks to hydraulic, pneumatic or mechanical mechanisms. Said first elements of variable length 15 allow the relative displacement of the mobile bases 13. Similarly, the columns 10 and 11 are connected to each other with second elements of variable length 16, as shown in figure 4.

Both elements of variable length 15 and 16 can be controlled in length, so that the position of the mobile columns 11 can be adjusted based on the size of the workpiece 4. Furthermore, controlling the lengths of the elements of variable length 15 and 16 allows the stress state applied to the workpiece 4 to be adjusted, giving the possibility of exerting any required stress state in or out of the plane of the workpiece 4.

For an exemplary machining of a workpiece 4, given that it is made of a material which has a fiber reinforcement, it is necessary to control the stress state depending on the direction in which it is being milled, which changes during the operation. The desired stresses in the cutting area, so that the operation does not have vibration problems, are tensile in all directions of the workpiece 4, so that, as neither torsion nor bending of the workpiece 4 is sought, the second element of variable length 16 that connect each pair of columns 10 and 11 must modify their length in unison, varying it throughout the operation to adjust the stress in each area.

In operations where, in addition to tension, bending or torsion of the workpiece 4 is sought, the second elements of variable length 16 that connect each pair of columns 10 and 11 must have different elongations, for example, to obtain negative bending in all directions, the elongation of the elements of variable length 16 must be greater than that of the first elements of variable length 15, causing the mobile columns 11 to tilt outwards and, as a consequence of the rigid connection of the workpiece 4 to the columns 10 and 11, bending the latter in a paraboloid shape.

As an example of simple yet practical use of this method, the machining of a centred slot in a thin plate was made to prove the usefulness of it. For this test, the workpiece 4 is a rectangular plate of 25 mm width and 65 mm of clearance between clamps 2. Tests have been performed with different thicknesses of the workpiece 4, ranging from 1 to 6 mm. For each test the tensile stress state applied was modified, taking values in the range of 0 to 70 % of the yield stress of the material, which was a very common aluminium alloy in the aerospace sector, the AI7075-T651.

During these tests, a great increase in the rigidity of the workpiece 4 was identified, reducing deformations up to a 70 % of the ones obtained without applying any stress state to the workpiece 4. This effect was especially important in the thinnest workpieces 4. Thanks to this increase in rigidity obtained, natural frequencies also raised up to more than 2.5 times the original ones, giving a great control over them to avoid vibration issues.

In terms of roughness, during these tests an improvement of a 25 to 50 % in Ra (average roughness) and Rz (difference between the highest peak and lowest valley within the sampling length) parameters was obtained when applying an external stress state, but an even greater visual upgrade was found, with a much more uniform machined surface, with less vibration marks and nearer to a mirror finish.

Probably the most important result of these tests was the improvement in the residual stress state generated in the machined surface, which for the usual machining operation, without any applied stress state gave strong tensile residual stresses near the surface, very dangerous for workpieces 4 subjected to fatigue cycles. In the tests in which an external tensile stress state was applied, these residual stresses were compensated, being compressive near the surface, greatly improving fatigue life of the workpieces 4. In the thickest workpieces 4, the generated compressive residual stresses had bigger magnitude than in the thinnest ones, as expected.

In all cases, the slot was machined in a single depth pass, varying from 0.3 to 3 mm. Although most slots could be machined without any applied tensile stress state, a slot of 0.7 mm depth in a 1 mm thickness plate was machined applying a tensile stress state and achieving great results with a mirror-like finish. This is one of the examples of operations that in the usual conditions of machining without any stress applied is difficult if not impossible to perform.

The numerical signs and corresponding components indicated in Fig. 1 to 4 are further listed below:

    base 1
    clamp 2
    wedges 3
    workpiece 4
    milling cutter 5
    screw 6, 7
    jaw 8, 9
    fixed column 10
    mobile columns 11
    fixed base 12
    mobile bases 13

joints 14
first elements of variable length 15
second elements of variable length 16
placing 20
applying 30
performing 40
releasing 50

**Claims**

1. Stress assisted machining method, that comprises the steps of:

   - placing (20) a workpiece (4) in a machining machine,
   - applying (30) a stress state to the workpiece (4), the stress state being selected from tensile, compression, bending, torsion and a combination of two or more of them,
   - performing (40) a machining operation while maintaining the stress state on the workpiece (4),
   - releasing (50) the applied stress state from the workpiece (4).

2. The method of claim 1, wherein the machining operation is a milling operation.

3. The method of any one of the preceding claims, wherein the workpiece (4) is of a material selected from metallic, polymeric, and polymeric or metallic matrix composite material.

4. The method of any of the preceding claims, wherein the workpiece (4) is a slender workpiece (4).

5. The method of claim 4, wherein the workpiece (4) is a turbine blade.

6. The method of any one of the preceding claims, wherein the stress state induced in the workpiece (4) is constant over time.

7. The method of any one of claims 1 to 5, wherein the stress state induced in the workpiece (4) is time-varying.

8. The method of any one of the preceding claims, wherein the stress state is below the yield stress of the workpiece (4).

9. The method of any one of the preceding claims, further comprising determination of the stress state to be applied from a section of material of the workpiece (4) affected in machining, and a maximum magnitude of the residual stress after the machining operation for a workpiece (4) material, a machining tool and machining parameters when no stress state is applied to the workpiece (4).

10. The method of claim 9, further comprising obtaining a section of material of the workpiece (4) affected during machining, and a maximum magnitude of residual stress after the machining operation for a workpiece (4) material, a machining tool and machining parameters when no stress state is applied to the workpiece (4).

11. The method of any of claims 9 or 10, wherein the stress state ($\sigma$) to be applied is:

$$\sigma = \sigma_r \times \frac{a_a}{a_n}$$

where $\sigma_r$ is the maximum residual stress on the surface of the workpiece (4), $a_a$ is the section of material of the workpiece (4) affected in machining and $a_n$ is the section of material of the workpiece (4) not affected by machining, all of them obtained for a machining operation done without any externally applied stress state.

12. The method of any one of the preceding claims, wherein the method comprises an additional step of correcting the applied stress state or the machining tool path to compensate the deformation of the workpiece (4) due to the stress state applied.

```
┌─────────────────────────────┐
│   PLACING A WORKPIECE       │  ╱ 20
│   IN A MACHINING MACHINE    │
└─────────────────────────────┘
              │
              ▼
┌─────────────────────────────┐
│   APPLYING A STRESS STATE TO│  ╱ 30
│   THE WORKPIECE             │
└─────────────────────────────┘
              │
              ▼
┌─────────────────────────────┐
│   PERFORMING A MACHINING    │  ╱ 40
│   OPERATION                 │
└─────────────────────────────┘
              │
              ▼
┌─────────────────────────────┐
│   RELEASING THE APPLIED STRESS│  ╱ 50
│   STATE AND REMOVING THE WORKPIECE│
└─────────────────────────────┘
```

FIG. 1

FIG. 2

**FIG. 3**

EP 4 681 867 A1

FIG. 4

Europäisches
Patentamt

European
Patent Office

Office européen
des brevets

**EUROPEAN SEARCH REPORT**

**Application Number**

EP 24 38 2769

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 492 046 B1 (MTU AERO ENGINES GMBH [DE]) 26 June 2013 (2013-06-26)<br>* figure 1 *<br>* paragraphs [0001], [0002], [0012], [0016], [0019], [0022], [0027], [0029], [0030] * | 1-12 | INV.<br>B23P9/00<br>B23P25/00<br><br>ADD.<br>C22F1/00<br>C21D7/02<br>G05B19/404 |
| | ----- | | |
| X | EP 3 078 448 A1 (ROLLS ROYCE DEUTSCHLAND [DE]) 12 October 2016 (2016-10-12)<br>* figures 2A,4 *<br>* paragraphs [0634], [0038], [0040], [0044], [0052] * | 1-4,6, 8-10,12 | |
| | ----- | | |
| X | CN 110 961 988 A (CHENGDU AIRCRAFT IND GROUP CO LTD) 7 April 2020 (2020-04-07)<br>* figures 1-3 *<br>* paragraphs [0011] - [0014] *<br>* abstract * | 1-4,6, 8-10,12 | |
| | ----- | | |
| X,D | CN 103 846 706 A (UNIV NORTHWESTERN POLYTECHNIC) 11 June 2014 (2014-06-11)<br>* figures 1-2 *<br>* paragraph [0013] *<br>* abstract * | 1-6,8 | **TECHNICAL FIELDS SEARCHED (IPC)**<br><br>C22F<br>G05B<br>C21D |
| | ----- | | |
| X | CN 104 858 682 B (UNIV BEIHANG) 26 December 2017 (2017-12-26)<br>* figures 1-2 *<br>* paragraphs [0007] - [0008] * | 1-8 | B23P |
| | ----- | | |

The present search report has been drawn up for all claims

| Place of search | Date of completion of the search | Examiner |
|---|---|---|
| The Hague | 30 April 2025 | Sérgio de Jesus, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt
European
Patent Office
Office européen
des brevets

**Application Number**

EP 24 38 2769

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

15

| | |
|---|---|
| Europäisches Patentamt<br>European Patent Office<br>Office européen des brevets | **LACK OF UNITY OF INVENTION**<br>**SHEET B** |

**Application Number**

**EP 24 38 2769**

The Search Division considers that the present European patent application does not comply with the requirements of unity of invention and relates to several inventions or groups of inventions, namely:

```
1. claims: 1-12

   Stress assisted machining method with a single stress state
   applied to the workpiece
                        ---

2. claims: 1-12

   Stress assisted machining method with a combined stress
   state applied to the workpiece
                        ---
```

EP 4 681 867 A1

## ANNEX TO THE EUROPEAN SEARCH REPORT
## ON EUROPEAN PATENT APPLICATION NO.

EP 24 38 2769

30-04-2025

| Patent document cited in search report | | Publication date | Patent family member(s) | | Publication date |
|---|---|---|---|---|---|
| EP 2492046 | B1 | 26-06-2013 | NONE | | |
| EP 3078448 | A1 | 12-10-2016 | EP 3078448 A1 | | 12-10-2016 |
| | | | US 2016298494 A1 | | 13-10-2016 |
| CN 110961988 | A | 07-04-2020 | NONE | | |
| CN 103846706 | A | 11-06-2014 | NONE | | |
| CN 104858682 | B | 26-12-2017 | NONE | | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 102615291 B
- CN 206702663 U
- CN 114700507 A
- CN 103846706 B